# EUROPÄISCHE PATENTANMELDUNG

(11) **EP 4 470 977 A1**
(43) Veröffentlichungstag der Anmeldung: **04.12.2024**
(21) Anmeldenummer: 24178215.0
(22) Anmeldetag: 27.05.2024
(51) Int. Cl.: C02F 1/44, C02F 1/52, C02F 5/10, C02F 5/14, B01D 61/04, B01D 61/02, C02F 103/10, C02F 103/16, C02F 101/10, C02F 103/18

(54) **VERFAHREN ZUR SULFATREDUZIERUNG IN PROZESSABWÄSSERN**

(30) Priorität: 30.05.2023 DE 102023114170
(71) Anmelder: UVW Unternehmensverbund Wassertechnik GmbH, 21031 Hamburg (DE)
(72) Erfinder: Kacirek, Klaus Hartmut, 22844 Norderstedt (DE)
(74) Vertreter: Jaeschke, Rainer

(57) **Zusammenfassung**

Die vorliegende Erfindung betrifft ein Verfahren zur Reduzierung von hohen Sulfatkonzentrationen in industriellen Prozessabwässern. Insbesondere betrifft die Erfindung ein Verfahren zur Entfernung von Sulfationen aus salzhaltigen Abwässern aus industriellen Prozessen, bei welchem Verfahren das Abwasser einer Gipsfällungsstufe zugeführt wird und die Klarphase in einer Nanofiltrationsstufe gefiltert wird. Gemäß der Erfindung wird vorgeschlagen, dass der Klarphase vor der Nanofiltrationsstufe ein Threshold-Stabilisator zugeführt wird, und dass das Konzentrat der Nanofiltrationsstufe wieder dem Abwasser vor der Gipsfällungsstufe zugeführt wird.

## Beschreibung

Die vorliegende Erfindung betrifft ein Verfahren zur Reduzierung von hohen Sulfatkonzentrationen in industriellen Prozessabwässern. Insbesondere betrifft die Erfindung ein Verfahren zur Entfernung von Sulfationen aus salzhaltigen Abwässern aus industriellen Prozessen, bei welchem Verfahren das Abwasser einer Gipsfällungsstufe zugeführt wird und die Klarphase in einer Nanofiltrationsstufe gefiltert wird.

Die Reduzierung hoher Sulfatgehalte im Prozessabwasser durch Fällung mit Calciumhydroxid und/oder Calciumchlorid mit anschließender Sedimentation und Filtration entspricht dem Stand der Technik. Sie führt allerdings zu einer Sulfatkonzentration in der Klarphase, die in vielen Fällen über den örtlich zulässigen Einleitbedingungen liegt. Diese Prozessabwässer haben oftmals einen hohen Salzgehalt und dadurch einen hohen osmotischen Druck, teils bis zu 100 bar, so dass eine Aufkonzentrierung der Salzgehalte durch Membrantrennverfahren wie der Umkehrosmose nur mit hohem technischem und energetischem Aufwand möglich ist.

In zahlreichen und sehr unterschiedlichen industriellen Prozessen fällt stark Schwefelsäure- bzw. Sulfat-haltiges Prozessabwasser an. Beispiele sind: Erzaufbereitung, Galvanikbetriebe, Abluftreinigungsanlagen und viele andere Prozesse. Diese Prozessabwässer können meistens nicht unbehandelt oder ungereinigt direkt in Schmutzwasserkanäle eingeleitet werden. Insbesondere stören hohe Sulfatkonzentrationen wegen deren Aggressivität gegenüber Beton. Daher sind Verfahren zur Reduzierung von Sulfaten von großer industrieller Bedeutung.

Das Übliche Verfahren zur Sulfatreduzierung ist die Fällung als Gips. Dabei wird das Prozessabwasser mit Calciumhydroxid und/oder mit Calciumchlorid behandelt, wobei Gips kristallin ausfällt. Die Kristallmasse sedimentiert und wird mittels Filtration entfernt.

Die Klarphase der Gipsfällung enthält eine Sulfatkonzentration von ca. 1.000 bis 1.600 g/m³. Verzichtet man auf einen deutlichen Calciumionenüberschuss bei der Fällung, kann der Sulfatgehalt auch bis zu 2.000 g/m³ betragen. Die ausgefällte Kristallmasse kann bei genügender Reinheit technisch verwertet werden. Eine weitergehende Reduzierung ist wegen der Löslichkeit von Calciumsulfat nach diesem Verfahren nicht möglich, jedoch verstößt eine Ableitung der Klarphase mit derartig hohen Sulfatkonzentrationen oftmals gegen behördliche Auflagen. Wirtschaftliche Verfahren zur weitergehenden Sulfatreduzierung sind daher von großem Nutzen.

Verschiedene Verfahren zur weitergehenden Sulfatreduzierung werden in der einschlägigen Literatur beschrieben und sind in den letzten Jahren auch umgesetzt worden. Hierzu gehören v.a. Fällungsverfahren mit Fällungsmitteln, die schwerer lösliche Sulfatverbinden erzeugen, wie z.B. Barium- und Bleisalze oder die Kombination von Calcium und Aluminiumsalzen. Weiteren Verfahren liegt die anaerobe, mikrobielle Reduzierung von Sulfat zu Sulfid zugrunde.

Die EP 0 196 506 A2 beschreibt ein Verfahren zum Reduzieren des Sulfatgehalts durch Fällung als Bleisulfat. Aufwendig sind dabei die Bleirückgewinnung und die Sulfatreduzierung durch einen mikrobiellen anaeroben Prozess, in dem Sulfat zu Sulfid reduziert wird. Einen ähnlichen Weg beschreiben die EP 2 054 348 B1 und die WO 2010/118730 A1 zur Reduzierung von Sulfat und Schwermetallen. Auch die DE 10 2008 005 412 A1 beschreibt ein Verfahren zur Behandlung von Abwässern durch mikrobielle Reduzierung zu Sulfid. Die DE 39 20 544 C2 wie auch DE 40 05 469 A1 und EP 3 110 765 A1 und DE 42 27 815 A1 beschreiben Verfahren zur Sulfatreduzierung durch Fällung als Calciumaluminiumsulfat, wobei ein Aluminiumoxid-Gips-Anhydrit gewonnen wird.

Nachteilig an den bekannten Verfahren ist allerdings, dass sie Probleme bei der Verwertung der abgeschiedenen Feststoffe bereiten oder technisch sehr aufwendig sind.

Der Erfindung liegt die Aufgabe zugrunde, ein Verfahren der eingangs geschilderten Art so auszubilden, dass eine bessere Sulfatreduzierung von Prozessabwässern möglich ist.

Die Aufgabe wird gemäß der Erfindung dadurch gelöst, dass der Klarphase vor der Nanofiltrationsstufe ein Threshold-Stabilisator zugeführt wird, und dass das Konzentrat der Nanofiltrationsstufe zumindest teilweise wieder dem Abwasser vor der Gipsfällungsstufe zugeführt wird.

Es hat sich herausgestellt, dass bestimmte Nanofiltrationsmembrane mit hohem, selektivem Rückhaltevermögen für Sulfationen einen Permeatfluss und damit eine Aufkonzentrierung bei niedrigem Druck erlauben. Die an Sulfaten aufkonzentrierte Lösung ist dann an Gips übersättigt. Es gelingt durch Dosierung spezieller gegen Gipsausfällungen als Threshold-Stabilisatoren wirkender Stoffe eine hohe Gipsübersättigung vollständig zu stabilisieren und auf diese Weise eine Verblockung der Nanofiltrationsmembran zu vermeiden.

Die Klarphase der Gipsfällung wird mit einem als Threshold-Stabilisator wirkenden Additiv versehen und in der Nanofiltrationsanlage eingedickt, die mit Membranmodulen bestückt ist, die ein hohes selektives Rückhaltevermögen für Sulfationen aufweisen. Nach der Nanofiltration erhält man ein an Sulfaten stark abgereichertes Permeat und ein an Sulfaten stark angereichertes Konzentrat. Das Konzentrat wird im Kreislauf erneut der Gipsfällung zuführt.

Manche Threshold-Stabilisatoren haben zudem die Eigenschaft, auf Kristalloberflächen adsorbiert und dadurch der Lösung entzogen zu werden. Führt man daher das angefallene Konzentrat erneut dem Gips-Fällungsreaktor zu, in welchem sich Kristallmasse befindet, so bricht das stabilisierte übersättigte System spontan in sich zusammen, ohne die Fällung und die Sulfatkonzentration in der Klarphase negativ zu beeinflussen.

Durch diese Verfahrenskombination ist eine Sulfatreduzierung im behandelten Abwasser um mehr als 90 % möglich.

Es ist günstig, wenn der Threshold-Stabilisator Wirkstoffe aus der Gruppe der Organophosphate und insbesondere Hydroxyethylidendiphosphonsäure und/oder Nitrilotrimethylenphosphonsäure und/oder Ethylendiamintetramethylenphosphonsäure und/oder Diethylentriaminpentamethylenphosphonsäure und/oder deren Salze aufweist. Auch kann vorgesehen werden, dass der Threshold-Stabilisator Wirkstoffe aus der Gruppe der Polycarbonsäuren und insbesondere Polyacrylsäure und/oder Polymaleinsäure und/oder Copolymerisaten und/oder deren Salze aufweist. Diese Threshold-Stabilisatoren weisen die gewünschten Eigenschaften auf, indem sie einerseits ein Ausfällen von Gips in der Nanofiltrationsstufe auch bei einer Übersättigung verhindern. Andererseits können sie auf Kristalloberflächen adsorbiert werden. Diese fallen aufgrund der Rückführung zusammen mit den Gipskristallen aus und liegen in der Klarphase der Gipsfällungsstufe demnach nicht mehr vor.

Gemäß einer Ausführungsform der Erfindung ist vorgesehen, dass zur Einhaltung der gültigen Grenzwerte für die Sulfateinleitung nur ein Teilstrom der Klarphase aus der Gipsfällungsstufe behandelt und mit dem Permeat der Nanofiltrationsstufe verschnitten wird. Damit lassen sich die Sulfatkonzentration im Permeat und/oder in der Klarphase aus der Gipsfällungsstufe einstellen und die Sulfatgrenzkonzentrationen können eingehalten werden.

Weiterhin ist kann vorgesehen werden, dass die Klarphase der Gipsfällungsstufe mit einem Druck von 4,0 bar bis 16,0 bar und insbesondere 4,0 bar bis 10,0 bar der Nanofiltrationsstufe zugeführt wird. Es hat sich gezeigt, dass bei bestimmten Membranen dieser Druck ausreicht, um einen Permeatfluss zu erzeugen, auch wenn der osmotische Druck deutlich höher liegt.

Während der letzten Jahre sind Membranen entwickelt worden, die eine hohe selektive Rückhaltung von Sulfationen ermöglichen und nur ein geringes Rückhaltevermögen für andere Ionen aufweisen. Verschiedene Membranen wurden miteinander verglichen, um herausfinden, welche für die vorliegende Problemstellung besonders gut geeignet sind. Dabei hat sich überraschenderweise gezeigt, dass bei einigen Nanofiltrationsmembranen bereits bei einem Pumpendruck von 5 bar Permeat zu fließen beginnt, auch wenn der osmotische Druck über 50 bar beträgt.

Als besonders gut geeignet hat sich dabei die Membran NANO 7 der Fa. Microdynnadir erwiesen. Es zeigte sich, dass eine Überschreitung der osmotischen Druckdifferenz zwischen Feed und Permeat für einen Permeatfluss ausreicht. Nur die Differenz der osmotischen Drücke zwischen Konzentrat und Permeat musste überwunden werden, um einen Permeatfluss aufrecht zu erhalten. Die technische Umsetzbarkeit und die Energiebilanz entsprechen dann weitgehend einer standardisierten Membran-Niederdruckanlage.

Es war zunächst ein salzreiches Prozessabwasser aus einem Galvanikbetrieb Gegenstand der Untersuchungen. Diese wurden anschließend auf die Aufbereitung von Prozessabwasser aus der Erzaufbereitung ausgedehnt. Die große Herausforderung für das hier anfallende Prozessabwasser besteht darin, dass es sich nach der ersten Reinigungsstufe, der Gipsfällung, um mit Gips gesättigtes Wässer mit oftmals sehr hohem Salzgehalt handelt.

Der Salzgehalt mit einer typischen durchschnittlichen Qualität kann einen osmotischen Druck von ca. 60 bar und höher aufweisen. Eine Salzreduzierung, d. h. Aufkonzentrierung mittels Umkehrosmosemembranen wäre daher technisch sehr aufwendig, nur unter großem Energieeinsatz möglich und würde ein schwer verwertbares Konzentrat ergeben.

Die Aufbereitung eines typischen Prozessabwassers aus einer Erzaufbereitung nach einer Gipsfällung bei 13 bar Pumpendruck zeigt die Tabelle 1.

**Tabelle 1: Aufbereitung von Prozessabwasser aus der Erzaufbereitung nach Gipsfällung**

| Parameter | Vorlage | | Permeat | | Konzentrat | | **Rückh.** |
|---|---|---|---|---|---|---|---|
| | mg/l | mol/l | mg/l | mol/l | mg/l | mol/l | [%] |
| Na⁺ | 22300 | 0,970 | 22100 | 0,961 | 22100 | 0,961 | 0,0 |
| K⁺ | 602 | 0,015 | 590 | 0,015 | 620 | 0,016 | 4,8 |
| Mg⁺⁺ | 8,9 | 0,000 | 2 | 0,000 | 16 | 0,001 | 85,4 |
| Ca⁺⁺ | 6840 | 0,171 | 4570 | 0,114 | 9430 | 0,235 | 51,5 |
| Summe K | | 1,327 | | 1,204 | | 1,448 | 16,9 |
| Cl⁻ | 46400 | 1,309 | 43000 | 1,213 | 49500 | 1,396 | 13,1 |
| SO₄⁻⁻ | 1400 | 0,015 | 58 | 0,001 | 2630 | 0,027 | 97,8 |
| NO₃⁻ | 8,6 | 0,000 | 8 | 0,000 | 9 | 0,000 | 8,9 |
| Summe A | | 1,338 | | 1,214 | | 1,451 | 16,3 |
| osmotischer Druck | 60,4 | | 56,16 | | 64,26 | | |

Die Aufbereitung eines typischen Prozessabwassers aus einem Galvanikbetrieb bei 6 bar Pumpendruck zeigt die Tabelle 2.

**Tabelle 2: Aufbereitung von Prozessabwasser aus einem Galvanikbetrieb nach Gipsfällung**

| | Vorlage | | Permeat | | Konzentrat | | **Rückh.** |
|---|---|---|---|---|---|---|---|
| Analyse | [mg/l] | [mmol/l] | [mg/l] | [mmol/l] | [mg/l] | [mmol/l] | [%] |
| Na⁺ | 1700 | 73,91 | 1480 | 64,35 | 2450 | 106,52 | 39,6 |
| K⁺ | 7,4 | 0,19 | 7 | 0,18 | 13,8 | 0,35 | 49,3 |
| Mg⁺⁺ | 3 | 0,12 | 1,1 | 0,05 | 10 | 0,41 | 89,0 |
| Ca⁺⁺ | 363 | 9,05 | 207 | 5,16 | 970 | 24,19 | 78,7 |
| Summe K | | 83,28 | | 69,73 | | 131,48 | |
| Cl⁻ | 2830 | 79,83 | 2620 | 73,91 | 2630 | 74,19 | 0,4 |
| SO₄⁻⁻ | 938 | 9,77 | 50,4 | 0,53 | 4880 | 50,83 | 99,0 |
| NO₃⁻ | 246 | 3,97 | 233 | 3,76 | 244 | 3,94 | 4,5 |
| Summe A | | 93,57 | | 78,19 | | 128,96 | |
| osmotischer Druck | 4,31 | | 3,61 | | 6,35 | | |

Eine solche Aufkonzentrierung von Sulfat hätte jedoch die Folge, dass die Löslichkeit von Gips überschritten und die Membranoberfläche verblocken würde. Ein schnelles Zuwachsen der Membranmodule der Nanofiltrationsstufe wäre die Folge. Es wurden jedoch die oben genannten Threshold-Inhibitoren gefunden, die die Kristallbildung von Gips in übersättigten Lösungen nicht nur verlangsamen, sondern jegliche Kristallbildung bis zu einem hohen Übersättigungsgrad verhindern. Diese Threshold-Stabilisatoren wirken bereits in sehr geringen Konzentrationen von einigen g/m³. Unter diesen gibt es spezielle Wirkstoffe, die besonders die Bildung von Gipskristallen verhindern und eine bis zu vierfache Übersättigung stabilisieren. Die übersättigte Lösung bleibt dabei klar. Es stellte sich dabei heraus, dass trotz der hohen Übersättigung der Dissoziationsgrad von Calciumsulfat den physikalisch-chemischen Gesetzmäßigkeiten von Salzlösungen entspricht. Mit diesen Wirkstoffen ist ein stabiler, ablagerungsfreier Prozess möglich.

Es konnte weiterhin gezeigt werden, dass die genannten Threshold-Inhibitoren die Eigenschaft haben, auf Kristalloberflächen adsorbiert und dadurch der Lösung entzogen zu werden. Führt man daher das angefallene Konzentrat dem Fällungsreaktor zu, in welchem sich Kristallmasse befindet, so bricht das stabilisierte übersättigte System spontan in sich zusammen, ohne die Fällung und die Sulfatkonzentration im Filtrat negativ zu beeinflussen. Die Wirkstoffe sind dann in der Klarphase der Gipsfällungsstufe nicht mehr nachweisbar.

Die Threshold-Stabilisatoren sind bereits in geringen Mengen wirksam. Es hat sich herausgestellt, dass eine Zuführung der Threshold-Stabilisator in einer Menge von 2,0 g/m³ bis 6,0 g/m³ in die Klarphase aus der Gipsfällungsstufe ausreicht. Weiterhin ist es günstig, wenn der Threshold-Stabilisator in einer wässrigen Lösung mit 8,0% bis 12% der Klarphase aus der Gipsfällung zugeführt wird. Bei einer 10%-gen wässrigen Lösung werden somit 20 g/m³ bis 60 g/m³ Wirkstofflösung der Klarphase aus der Gipsfällung zugeführt. Die wässrige Lösung kann aus einem Konzentrat des Wirkstoffs bereitgestellt werden.

Das erfindungsgemäße Verfahren erlaubt daher eine Übersättigung des Konzentrats der Nanofiltrationsstufe mit Sulfat, ohne dass die Gefahr besteht, dass Gips ausfällt und die Membrane zusetzt. Das Permeat der Nanofiltrationsstufe ist dann weitestgehend von Sulfat befreit, und die Sulfatkonzentration liegt unter der vorgeschriebenen Sulfatgrenzkonzentration. Eine Einleitung in Schmutzwasserkanäle ist daher möglich.

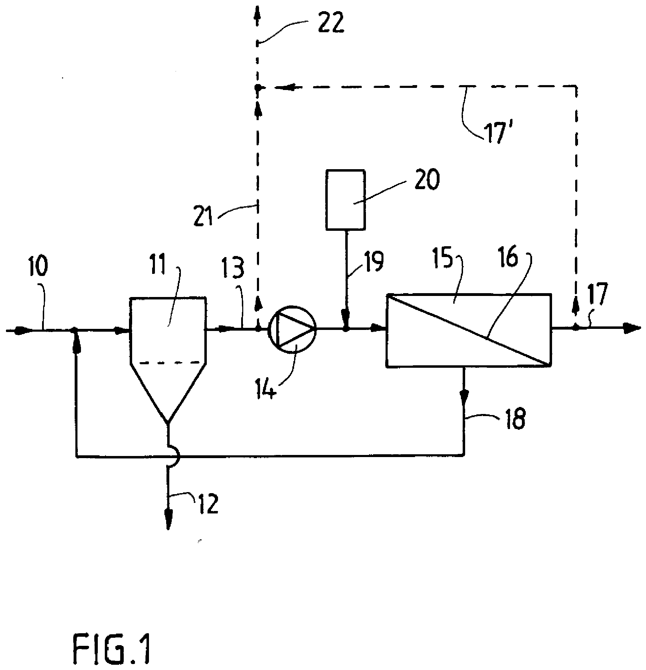

Die Erfindung wird im Folgenden anhand der schematischen Zeichnung näher erläutert. Die einzige Figur 1 zeigt schematisch den Verfahrensablauf der vorliegenden Erfindung.

Das in einem technischen Prozess anfallende Prozessabwasser 10 mit hohem Salzgehalt und insbesondere einem hohen Sulfatgehalt wird zunächst einer Gipsfällungsstufe 11 zugeführt. Dort wird das Sulfat mittels Calciumhydroxid (Ca(OH)₂) oder Calciumchlorid (CaCl₂) als Gips (CaSO₄ ·2H₂O) ausgefällt:

Ca²⁺ + 2OH⁻ + 2H⁺ + SO₄²⁻ + nH₂O → CaSO₄ ·2H₂O + nH₂O

Es entstehen Gipskristalle, die aus der Gipsfällungsstufe im Gipsabzug 12 abgeführt werden können. Diese Art der Fällung ist bekannt und bedarf keiner weiteren Erläuterung.

In der Klarphase 13 der Gipsfällung 11 liegt Sulfat in einer für die Einleitung in die Schmutzwasserkanäle zu hohen

Konzentration von 1.000 g/m³ bis 1.600 g/m³ und je nach zugeführten Calciumionenüberschuss auch bis zu 2.000 g/m³ vor. Die Klarphase 13 wird mittels einer Pumpe 14 einer Nanofiltrationsstufe 15 unter Überdruck zugeführt. Der Überdruck beträgt beispielsweise bis zu 16 bar. In der Nanofiltrationsstufe 15 sind Membrane 16 angeordnet, die ein hohes Rückhaltevermögen für Sulfationen aufweisen.

In der Nanofiltrationsstufe 15 wird die Klarphase 13 weiter von dem darin enthaltenen Sulfat befreit derart, dass im Permeat 17 Sulfat nur noch unterhalb der zulässigen Grenzkonzentration enthalten ist. Wie oben in den Tabellen 1 und 2 gezeigt, kann in der Nanofiltrationsstufe 15 bei einer Erzaufbereitung 97,8% der Sulfationen (SO₄²⁻) und bei einem Galvanikbetrieb 99,0% der Sulfationen (SO₄²⁻) zurückgehalten werden.

Damit das Sulfat im Konzentrat 18 der Nanofiltrationsstufe 15 nicht ausfällt, wird der Klarphase 13 der Gipsfällung vor der Nanofiltrationsstufe 15 ein Additiv 19 mit einem Threshold-Stabilisator zugeführt. Das Additiv liegt in Form einer wässrigen Lösung mit einem Wirkstoffgehalt von beispielsweise 3,0 g/m³ in einem Vorratsbehälter 20 vor. Mit einer nicht gezeigten Dosierpumpe wird das Additiv 19 entweder vor der Pumpe 14 oder nach der Pumpe 14 der Klarphase 13 zugegeben.

Die Klarphase 13 der Gipsfällungsstufe 11 kann für die Nanofiltration nicht immer ausreichend klar sein. Es kann daher zweckmäßig sein, die Klarphase der Gipsfällung vor dem Eintritt in die Nanofiltrationsstufe 15 in einem nicht gezeigten Filter zu filtern, um Schwebstoffe zu entfernen und um der Nanofiltrationsstufe 15 eine weitestgehend klare Flüssigkeit zuzuführen.

Das Additiv beziehungsweise der darin enthaltene Wirkstoff ist ausgewählt aus der Gruppe der Organophosphate und insbesondere Hydroxyethylidendiphosphonsäure und/oder Nitrilotrimethylenphosphonsäure und/oder Ethylendiamintetramethylenphosphonsäure und/oder Diethylentriaminpentamethylenphosphonsäure und/oder deren Salze. Alternativ kann der Threshold-Stabilisator Wirkstoffe aus der Gruppe der Polycarbonsäuren und insbesondere Polyacrylsäure und/oder Polymaleinsäure und/oder Copolymerisaten und/oder deren Salze aufweisen. Durch diese Threshold-Stabilisatoren ist eine Übersättigung von Gips oder Sulfat im Konzentrat 18 der Nanofiltrationsstufe 15 möglich, ohne dass Gips ausfällt und die Membran 16 zusetzt.

Das Konzentrat 18 ist eine klare Flüssigkeit und wird vollständig oder teilweise wieder dem Prozessabwasser 10 zugeführt. In der Gipsfällungsstufe 11 liegt Gips in der kristallinen Form vor. Das übersättigte und stabilisierte Konzentrat zerfällt, und der Threshold-Stabilisator wird durch die Gipskristalle adsorbiert. Damit wird der Threshold-Stabilisator aus dem Kreislauf entfernt, und der Fällungsprozess von Sulfat in der Gipsfällungsstufe 11 wird nicht beeinflusst. Die Wirkstoffe des Threshold-Stabilisators sind in der Klarphase 13 der Gipsfällungsstufe 11 nicht mehr nachweisbar.

Durch dieses Verfahren gelingt es, deutlich mehr Sulfat dem Prozessabwasser 10 zu entziehen als vorher. Der apparative Aufwand ist gering, und die Nanofiltrationsstufe braucht auch nur mit einem relativ niedrigen Überdruck von 4 bar bis 10 bar oder 15 bar betrieben zu werden.

Zur Einhaltung der gültigen Grenzwerte ist es manchmal nicht erforderlich, die gesamte Klarphase 13 aus der Gipsfällungsstufe 11 der Nanofiltrationsstufe 15 zuzuführen. Dies ist beispielsweise dann der Fall, wenn die Sulfatkonzentration im Prozessabwasser 10 bereits relativ gering ist und die Nanofiltration dann ein zu hohes Rückhaltevermögen für Sulfat aufweist.

Es kann vorkommen, dass die Sulfatkonzentration in der Klarphase 13 aus der Gipsfällungsstufe 11 beispielsweise 1.200 mg/l und der Grenzwert für die Einleitung zum Beispiel 600 mg/l betragen. Das Permeat 17 der Nanofiltrationsstufe 15 weist lediglich 100 mg/l Sulfat auf. Dann kann zur Betriebskostenreduzierung ein Teilstrom 21 der Klarphase 13 aus der Gipsfällungsstufe 11 mit dem Permeat 17 der Nanofiltrationsstufe 15 verschnitten werden, bis die Sulfatkonzentration des so zusammengesetzten Abwasserstroms 22 unterhalb der Grenzwerte liegt. Diese Möglichkeit ist in der Zeichnung gestrichelt dargestellt.

## Patentansprüche

1. Verfahren zur Entfernung von Sulfationen aus salzhaltigen Abwässern (10) aus industriellen Prozessen, bei welchem Verfahren das Abwasser einer Gipsfällungsstufe (11) zugeführt wird und die Klarphase (13) in einer Nanofiltrationsstufe (15) gefiltert wird, **dadurch gekennzeichnet, dass** der Klarphase (13) vor der Nanofiltrationsstufe (15) ein Threshold-Stabilisator (19) zugeführt wird, und dass das Konzentrat (18) der Nanofiltrationsstufe zumindest teileweise wieder dem Abwasser (10) vor der Gipsfällungsstufe (11) zugeführt wird.

2. Verfahren nach Anspruch 1, **dadurch gekennzeichnet, dass** als Abwasser (10) ein konzentriertes Prozessabwasser mit erhöhtem Sulfatgehalt eingesetzt wird.

3. Verfahren nach Anspruch 1 oder 2, **dadurch gekennzeichnet, dass** als Fällungsmittel in der Gipsfällungsstufe (11) Calciumhydroxid und/oder Calciumchlorid zugeführt wird.

4. Verfahren nach einem der Ansprüche 1 bis 3, **dadurch gekennzeichnet, dass** die Nanofiltrationsstufe (15) Membrane (16) mit einem hohen selektiven Rückhaltevermögen für Sulfationen aufweist.

5. Verfahren nach einem der Ansprüche 1 bis 4, **dadurch gekennzeichnet, dass** der Threshold-Stabilisator Wirkstoffe aus der Gruppe der Organophosphate und insbesondere Hydroxyethylidendiphosphonsäure und/oder Nitrilotrimethylenphosphonsäure und/oder Ethylendiamintetramethylenphosphonsäure und/oder Diethylentriaminpentamethylenphosphonsäure und/oder deren Salze aufweist.

6. Verfahren nach einem der Ansprüche 1 bis 4, **dadurch gekennzeichnet, dass** der Threshold-Stabilisator Wirkstoffe aus der Gruppe der Polycarbonsäuren und insbesondere Polyacrylsäure und/oder Polymaleinsäure und/oder Copolymerisaten und/oder deren Salze aufweist.

7. Verfahren nach einem der Ansprüche 1 bis 6, **dadurch gekennzeichnet, dass** der Threshold-Stabilisator als wässrige Lösung mit einer Konzentration von 2,0 g/m³ bis 4,0 g/m³ der Klarphase aus der Gipsfällungsstufe zugeführt wird.

8. Verfahren nach einem der Ansprüche 1 bis 7, **dadurch gekennzeichnet, dass** der Threshold-Stabilisator in einer Wirkstoffmenge von 0,2 g/m³ bis 4,0 g/m³ und insbesondere von 0,5 g/m³ bis 1,5 g/m³ der Klarphase aus der Gipsfällung zugeführt wird.

9. Verfahren nach einem der Ansprüche 1 bis 8, **dadurch gekennzeichnet, dass** ein erster Teilstrom der Klarphase (13) aus der Gipsfällungsstufe (11) behandelt wird, und dass ein zweiter Teilstrom (21) der Klarphase (13) aus der Gipsfällungsstufe (11) mit dem Permeat (17') der Nanofiltrationsstufe (15) verschnitten wird.

10. Verfahren nach einem der Ansprüche 1 bis 9, **dadurch gekennzeichnet, dass** die Klarphase (13) der Gipsfällungsstufe (11) mit einem Druck von 4,0 bar bis 16,0 bar und insbesondere 4,0 bar bis 10,0 bar der Nanofiltrationsstufe (15) zugeführt wird.
